# EUROPEAN PATENT APPLICATION

(11) **EP 4 387 114 A1**
(43) Date of publication of application: **19.06.2024**
(21) Application number: 23215537.4
(22) Date of filing: 11.12.2023
(51) Int. Cl.: H04B 5/26, H04B 5/43

(54) **NEAR FIELD COMMUNICATION ANTENNA**

(30) Priority: 13.12.2022 US 202218079938
(71) Applicant: Tyco Electronics Holdings (Bermuda) No. 7 Limited, Hamilton HM11 (BM); TE Connectivity Solutions GmbH, 8200 Schaffhausen (CH); Tyco Electronics AMP Korea Co., Ltd., Gyeongsan 712837 (KR)
(72) Inventor: KIM, Jung-Hoon, Suwon 443-380 (KR); HSIANG, Kuei Hsu, Taipei 11070 (TW); SHIN, Hoo, Suwon 443-380 (KR); VANJANI, Kiran, Fremont, 94555-3641 (US); LEE, Chang Hyun, Suwon 443-380 (KR)
(74) Representative: Ashton, Gareth Mark

(57) **Abstract**

A near field communication (NFC) antenna (110) includes a carrier (130) having a disk (134) including a first surface (144) and a second surface (142). The disk (134) surrounds a central bore (132). The central bore (132) is open through the disk between a top (138) of the carrier and a bottom (136) of the carrier. The NFC antenna includes an antenna circuit (152) on the disk. The antenna circuit (152) includes a first pad (154) and a second pad (156)_electrically connected to the first pad. The NFC antenna includes an electronic component (150) at the first surface (144) of the disk and coupled to the first pad (154). The NFC antenna includes an antenna element (160) coupled to the second surface (142) of the disk. The antenna element (160) includes a conductor arranged as an RF coil (164). The RF coil (164) extends along the disk (134) and surrounds the central bore (132). An end (182, 184) of the RF coil is coupled to the second pad (156).

## Description

### BACKGROUND OF THE INVENTION

The subject matter herein relates generally to near field communication (NFC) antennas.

NFC technology is a short-range wireless communication technology. As NFC technology has been developed, NFC devices have been more commonly employed in mobile devices. NFC technology allows contactless data exchange between electronic devices. Systems using NFC technology may include an NFC tag on one device and an NFC reader on another device. NFC tags may have size and shape constraints. There is a desire to reduce the size of NFC antennas to fit within small form factor NFC tags.

### BRIEF DESCRIPTION OF THE INVENTION

In one embodiment, a near field communication (NFC) antenna is provided and includes a carrier having a disk including a first surface and a second surface. The disk surrounds a central bore. The central bore is open through the disk between a top of the carrier and a bottom of the carrier. The NFC antenna includes an antenna circuit on the disk. The antenna circuit includes a first pad and a second pad electrically connected to the first pad. The NFC antenna includes an electronic component at the first surface of the disk and coupled to the first pad. The NFC antenna includes an antenna element coupled to the second surface of the disk. The antenna element includes a conductor arranged as an RF coil. The RF coil extends along the disk and surrounds the central bore. An end of the RF coil is coupled to the second pad.

In another embodiment, a near field communication (NFC) antenna is provided and includes a carrier having a disk including a first surface and a second surface. The disk surrounds a central bore. The central bore is open through the disk between a top of the carrier and a bottom of the carrier. The NFC antenna includes an antenna circuit on the disk. The antenna circuit includes a first pad and a second pad electrically connected to the first pad. The NFC antenna includes an electronic component at the first surface of the disk and coupled to the first pad. The NFC antenna includes an antenna element coupled to the second surface of the disk. The antenna element includes a conductor arranged as an RF coil. The RF coil extends along the disk and surrounds the central bore. An end of the RF coil is coupled to the second pad. The NFC antenna includes a cover covering the carrier, the antenna circuit, the electronic component, and the antenna element from the external environment.

In a further embodiment, a near field communication (NFC) antenna is provided and includes a carrier having a disk including a first surface and a second surface. The disk surrounds a central bore. The central bore is open through the disk between a top of the carrier and a bottom of the carrier. The disk includes an inner edge and an outer edge between the top and the bottom of the carrier. The inner edge facing the central bore. The disk having a ring-shaped footprint defined between the inner edge and the outer edge. The NFC antenna includes an antenna circuit on the disk. The antenna circuit includes a first pad and a second pad electrically connected to the first pad. The NFC antenna includes an electronic component at the first surface of the disk and coupled to the first pad. The electronic component arranged within the footprint of the disk between the inner edge and the outer edge. The NFC antenna includes an antenna element coupled to the second surface of the disk. The antenna element includes a conductor arranged as an RF coil. An end of the RF coil is coupled to the second pad. The RF coil surrounds the central bore and arranged within the footprint of the disk between the inner edge and the outer edge.

### BRIEF DESCRIPTION OF THE DRAWINGS

Figure 1 is a schematic illustration of a communication system in accordance with an exemplary embodiment.
Figure 2 is a perspective view of the NFC antenna of the second electrical device (shown in Figure 1) in accordance with an exemplary embodiment.
Figure 3 is a perspective view of the antenna assembly of the NFC antenna in accordance with an exemplary embodiment.
Figure 4 is an exploded view of the antenna assembly of the NFC antenna in accordance with an exemplary embodiment.
Figure 5 is a bottom view of the NFC antenna in accordance with an exemplary embodiment.
Figure 6 is a side view of the NFC antenna in accordance with an exemplary embodiment.

### DETAILED DESCRIPTION OF THE INVENTION

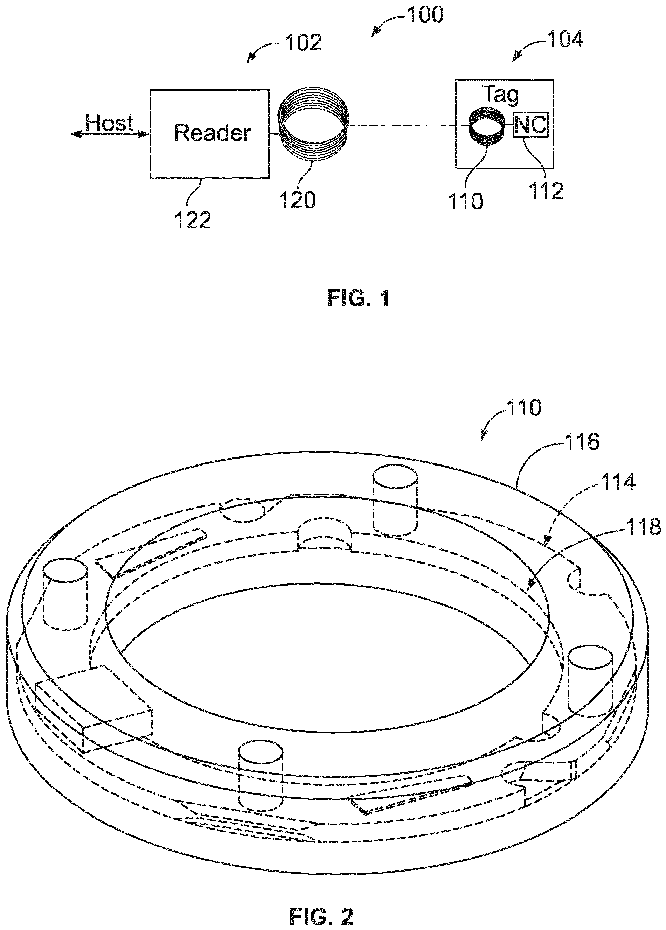

Figure 1 is a schematic illustration of a communication system 100 in accordance with an exemplary embodiment. The communication system 100 provides wireless communication between a first electrical device 102 and a second electrical device 104. In an exemplary embodiment, the communication system 100 is a near field communication (NFC) system.

In various embodiments, the communication system 100 uses short-range wireless technologies to allow communication at a separation distance of approximately 20 cm or less, such as at approximately 10 cm or less. In an exemplary embodiment, the communication system operates at 13.56 MHz on ISO/IEC 18000-3 air interface and at rates ranging from 106 kbit/s to 424 kbit/s.

In an exemplary embodiment, the first electrical device 102 is an initiator or reader and the second electrical device 104 is a target. The first electrical device 102 includes an NFC antenna 120 that generates an RF field, which can power the second electrical device 104. The NFC antenna 120 is connected to a host circuit board 122. The first electrical device 102 (for example, reader or initiator) may provide a carrier field and the second electrical device 104 (for example, target) includes an NFC antenna 110 that communicates with the NFC antenna 120. For example, the second electrical device 104 may act as a transponder and communicate by modulating the incident field. The second electrical device 104 may draw its operating power from the magnetic field provided by the first electrical device 102. The second electrical device 104 may include an electronic component 112, such as an integrated circuit or chip. The electronic component 112 may be a microprocessor in various embodiments. In other various embodiments, the second electrical device 104 may be a powered device to allow peer-to-peer communication. For example, both the first and second electrical devices 102, 104 communicate by alternately generating their own magnetic fields and are configured to receive data from each other.

The second electrical device 104 may be in a simple form, such as unpowered tags, stickers, key fobs, or cards. Other types of electrical devices may be used in alternative embodiments, such as a smartphone, a tablet, a computer, and the like. The second electrical device 104 may contain data and may be read-only, but may be writable. The second electrical device 104 may be custom-encoded and may include unique data, such as a unique identification. The second electrical device 104 can securely store personal data, such as debit and credit card information, loyalty program data, PINs and networking contacts, among other information.

The communication system 100 may use inductive coupling between antennas of the first and second electrical devices 102, 104 (for example, effectively forming an air-core transformer). The distance separating the first and second electrical devices 102, 104 may be relatively small compared to the wavelength of electromagnetic radiation (radio waves) of the operating frequency (for example, about 22 meters), thus defining near field communication. The first electrical device 102 may use an alternating magnetic field as the main coupling factor and almost no power is radiated in the form of radio waves (which are electromagnetic waves, also involving an oscillating electric field). As such, interference between the first and second electrical devices and any radio communications at the same frequency or with other devices much beyond the intended range may be minimized.

Figure 2 is a perspective view of the NFC antenna 110 of the second electrical device 104 (shown in Figure 1) in accordance with an exemplary embodiment. The NFC antenna 110 includes an antenna assembly 114 (shown in phantom) and a cover 116 surrounding the antenna assembly 114.

The cover 116 covers the antenna assembly 114 to protect the components of the antenna assembly 114 from the external environment. The antenna assembly 114 may be housed within the cover 116, for example fully enclosed inside the cover 116. In an exemplary embodiment, the cover 116 is manufactured from a polymer material, such as a polyamide material. The cover 116 may be IP 67 rated being waterproof to protect the antenna assembly 114 from damage from moisture or water. The cover 116 may be applied by overmolding the antenna assembly 114 in various embodiments. The cover 116 may be a hot melt applied to the antenna assembly 114 to cover the antenna assembly 114. The cover 116 includes a central bore 118 passing through the cover 116. The central bore 118 is open, such as to receive another object, such as a keychain.

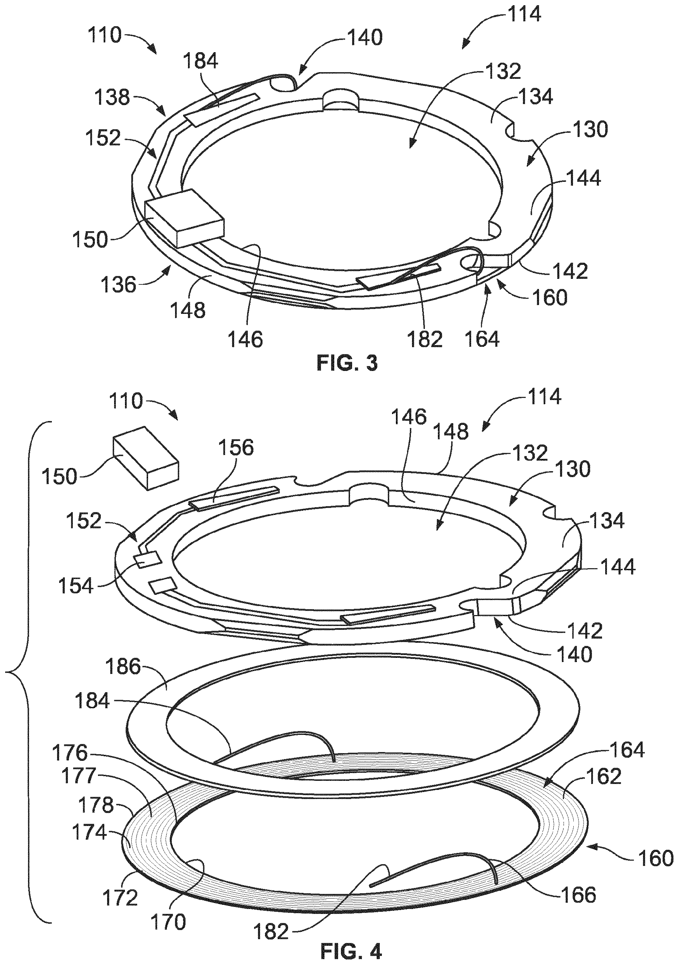

Figure 3 is a perspective view of the antenna assembly 114 of the NFC antenna 110 in accordance with an exemplary embodiment. Figure 4 is an exploded view of the antenna assembly 114 of the NFC antenna 110 in accordance with an exemplary embodiment.

The antenna assembly 114 of the NFC antenna 110 includes a carrier 130 and an antenna element 160 coupled to the carrier 130. In an exemplary embodiment, the antenna assembly 114 includes an electronic component 150 coupled to an antenna circuit 152. The electronic component 150 is electrically connected to the antenna element 160 via the antenna circuit 152. The antenna element 160, the carrier 130, and the electronic component 150 are arranged in a stacked configuration. For example, the electronic component 150 is located above the carrier 130 and the antenna element 160 is located below the carrier 130, or vice versa. The antenna element 160 and the electronic component 150 may be contained within (for example, share) the footprint of the carrier 130.

In an exemplary embodiment, the carrier 130 is cylindrical or ring-shaped having a central bore 132 through the center of the carrier 130. The carrier 130 includes a disk 134, which surrounds the central bore 132. In an exemplary embodiment, the central bore 132 is open through the carrier 130 between a bottom 136 of the carrier 130 and a top 138 of the carrier 130. The carrier 130 may be manufactured from a plastic material, such as being a molded part. In various embodiments, the carrier 130 may be a circuit board, such as a rigid circuit board or a flexible circuit board defining a substrate for the antenna circuit 152.

In an exemplary embodiment, the disk 134 is ring-shaped. The disk 134 may be circular. The central bore 132 passes through the disk 134. The disk 134 is provided at or near the bottom 136. The disk 134 extends between a lower surface 142 and an upper surface 144 at an opposite side of the disk from the lower surface 142. In an exemplary embodiment, the disk 134 includes one or more cutouts 140 to provide access between the lower surface 142 and the upper surface 144.

In an exemplary embodiment, the disk 134 includes an inner edge 146 and an outer edge 148 radially outward of the inner edge 146. The inner edge 146 faces the central bore 132. The disk 134 has a width between the inner edge 146 and the outer edge 148. Optionally, the width may be generally uniform circumferentially around the disk 134. The disk 134 has a ring-shaped footprint defined between the inner edge 146 and the outer edge 148.

In an exemplary embodiment, the electronic component 150 is mounted to a first surface of the disk 134, such as the upper surface 144 of the disk 134. The electronic component 150 may be soldered to the disk 134, such as to the antenna circuit 152. In various embodiments, the electronic component 150 is an integrated circuit or chip. The electronic component 150 may be a microprocessor in various embodiments. The electronic component 150 may be a memory module in various embodiments. Optionally, multiple electronic components 150 may be provided. In the illustrated embodiment, the electronic component 150 is rectangular shaped having a length and a width. Optionally, the width may be less than the width of the disk 134 such that the electronic component 150 fits within the footprint of the disk 134. The electronic component may have other shapes in alternative embodiments.

In an exemplary embodiment, the antenna circuit 152 is provided on the disk 134, such as on the upper surface 144 and/or the lower surface 146 of the disk 134. The antenna circuit 152 includes pads, traces, vias or other circuit components. The antenna circuit 152 may be printed circuits on the disk 134. In an exemplary embodiment, the antenna circuit 152 includes one or more pads 154 at a mounting area. The electronic component 150 may be electrically connected to the antenna circuit 152 at the one or more pads 154. For example, the electronic component 150 may be soldered to the one or more pads 154. In an exemplary embodiment, the antenna circuit 152 includes one or more pads 156. The antenna element 160 may be electrically connected to the antenna circuit 152 at the one or more pads 156. For example, ends of the coil of the antenna element 160 may be soldered to the one or more pads 156. The pad(s) 156 may be electrically connected to the pad(s) 154 via traces or other circuit components of the antenna circuit 152.

The antenna element 160 is configured to be coupled to the carrier 130. The antenna element 160 includes a conductor 162. The conductor 162 is formed into an RF coil 164. The RF coil 164 surrounds the central bore 132. In an exemplary embodiment, the conductor 162 includes a wire 166, such as a coated wire having a coating or jacket on the exterior of the wire 166. The wire 166 may be a small diameter wire. In various embodiments, the wire 166 is a 0.07 mm wire; however, the wire 166 may have other diameters in alternative embodiments. Other types of conductors may be used in alternative embodiments other than a wire, such as a circuit such as a printed circuit or a laser direct structured (LDS) circuit.

In an exemplary embodiment, the RF coil 164 is generally ring-shaped extending along a horizontal plane. The RF coil 164 extends between an inner edge 170 and an outer edge 172. The RF coil 164 is wound to include multiple windings 174. For example, the RF coil 164 may be wound in a spiral pattern to form the windings 174. The windings 174 are stacked, such as being stacked horizontally (for example, radially between the inner edge 170 and the outer edge 172). For example, the RF coil 164 may include an inner coil 176, an outer coil 178, and at least one mid-coil 177 between the inner coil 176 and the outer coil 178. The inner coil 176, the mid-coils 177, and the outer coil 178 are horizontally offset from each other (for example, horizontally stacked). Horizontal stacking the windings 174 increases the overall length of the conductor 162 without increasing the overall height of the RF coil 164. The number of windings 174 are based on the diameter of the wire 166 and the desired footprint (for example, width) of the carrier 130. In other embodiments, the windings 174 may additionally be stacked vertically, such as on in two or more layers or on opposite sides of a substrate.

The conductor 162 extends between a first end 182 and a second end 184. The conductor 162 is wound between the first and second ends 182, 184 to form the RF coil 164. The first and second ends 182, 184 are configured to be terminated to the antenna circuit 152, such as to the pads 156. The first and second ends 182, 184 may be terminated directly to the electronic component 150 in alternative embodiments. In an exemplary embodiment, the first and second ends 182, 184 extend through the cutouts 140 from the bottom side of the disk 134 to the top side of the disk 134 to terminate to the pads 156.

In various embodiments, the antenna element 160 is in the form of an LDS structure. The LDS structure includes an LDS circuit on an LDS substrate. The LDS substrate may be a flexible film in various embodiments. The LDS circuits are applied to the LDS substrate, such as to an upper surface and/or a lower surface of the LDS substrate. The LDS substrate may be defined by the disk 134 in various embodiments. For example, the LDS circuits may be formed on the lower surface of the disk 134. The LDS circuits define the windings 174. For example, the LDS circuits may be arranged in a spiral pattern. The windings may be vertically offset and/or horizontally offset.

In an exemplary embodiment, the antenna element 160 is coupled to one of the surfaces of the disk 134, such as the lower surface 142. The RF coil 164 may be adhered to the disk 134 using an adhesive layer 186. The spiral windings 174 extend between the inner edge 146 and the outer edge 148 of the disk 134. In an exemplary embodiment, the RF coil 164 has a ring-shaped footprint having a central bore through the RF coil 164. The RF coil 164 is coupled to the lower surface 142 of the disk 134 such that the footprint of the RF coil 164 fits within the footprint of the disk 134. The central bore of the RF coil 164 is axially aligned with the central bore 132 of the disk 134.

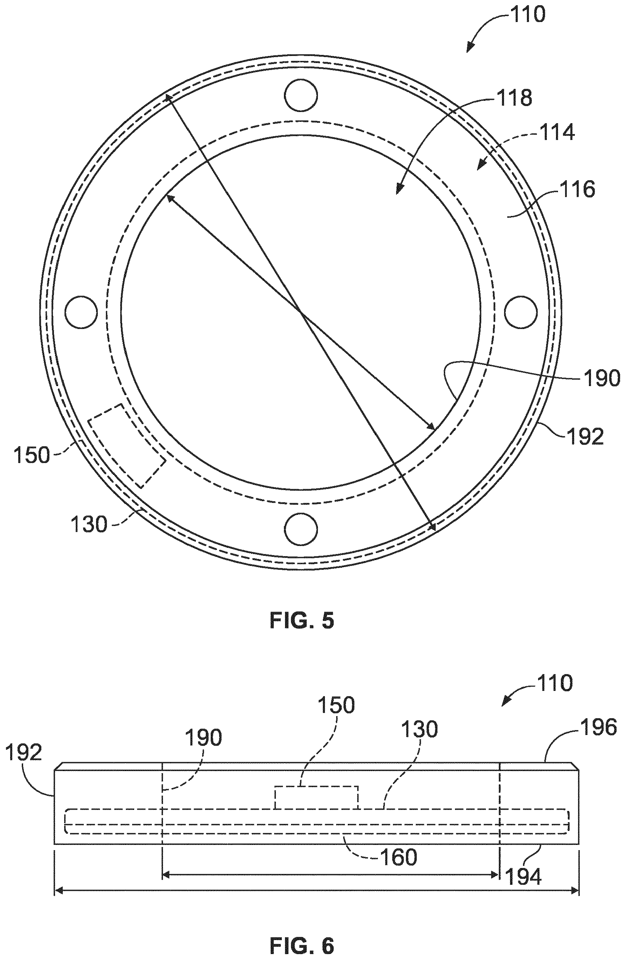

Figure 5 is a bottom view of the NFC antenna 110 in accordance with an exemplary embodiment. Figure 6 is a side view of the NFC antenna 110 in accordance with an exemplary embodiment. The NFC antenna 110 includes the antenna assembly 114 within the cover 116. The cover 116 surrounds the antenna assembly 114 to protect the antenna assembly 114 from the external environment. In an exemplary embodiment, the cover 116 is waterproof to protect the antenna assembly 114.

The cover 116 has a footprint surrounding the antenna assembly 114. The cover 116 is ring-shaped surrounding the central bore 118. The cover 116 has an inner diameter defined by an inner edge 190. The inner diameter may be between 8 mm and 10 mm, such as approximately 8.5 mm in various embodiments. The cover 116 has an outer diameter defined by an outer edge 192. The outer diameter may be between 10 mm and 15 mm, such as approximately 12.4 mm in various embodiments. The antenna assembly 114 fits within the footprint of the cover 116. For example, the carrier 130, the electronic component 150, and the antenna element 160 fit within the footprint of the cover 116 (for example, between the inner edge 190 and the outer edge 192. The cover 116 has a cover height between a bottom 194 and a top 196. The cover height may be approximately 2.0 mm in various embodiments.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the invention without departing from its scope. Dimensions, types of materials, orientations of the various components, and the number and positions of the various components described herein are intended to define parameters of certain embodiments, and are by no means limiting and are merely exemplary embodiments. Many other embodiments and modifications within the spirit and scope of the claims will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

## Claims

1. A near field communication, NFC, antenna (110) comprising:
a carrier (130) having a disk (134) including a first surface (144) and a second surface (142), the disk surrounding a central bore (132), the central bore being open through the disk between a top (138) of the carrier and a bottom (136) of the carrier;
an antenna circuit (152) on the disk, the antenna circuit including a first pad (154) and a second pad (156) electrically connected to the first pad;
an electronic component (150) at the first surface (144) of the disk and coupled to the first pad (154); and
an antenna element (160) coupled to the second surface (142) of the disk, the antenna element including a conductor (162) arranged as an RF coil (164), the RF coil extending along the disk and surrounding the central bore (132), an end (182, 184) of the RF coil being coupled to the second pad (156).

2. The NFC antenna of claim 1, wherein the disk (134) is positioned between the electronic component (150) and the antenna element (160).

3. The NFC antenna of claim 1 or 2, wherein the disk (134), the electronic component (150), and the antenna element (160) are vertically stacked with the electronic component (150) above the top (138) of the carrier and the antenna element (160) below the bottom (136) of the carrier.

4. The NFC antenna of claim 1, 2 or 3, wherein the disk (134) includes an inner edge (146) and an outer edge (148) between the top (138) and the bottom (136) of the carrier, the inner edge (146) facing the central bore (132), the disk (134) having a ring-shaped footprint defined between the inner edge (146) and the outer edge (148), the electronic component (150) arranged within the footprint of the disk (134) between the inner edge (146) and the outer edge (148).

5. The NFC antenna of any preceding claim, wherein the RF coil (164) includes a plurality of windings (174) including an inner winding (176) and an outer winding (178) radially outward of the inner winding, the RF coil (164) having a ring-shaped footprint defined between the inner winding (176) and the outer winding (178), the electronic component (150) arranged within the footprint of the coil.

6. The NFC antenna of any preceding claim, wherein the first pad (154) and the second pad (156) are provided on the first surface (144), the end (182, 184) of the RF coil extending to the first surface (144) of the disk to terminate to the second pad (156).

7. The NFC antenna of any preceding claim, wherein the electrical component (150) has a component width, the disk (134) having a disk width between an inner edge (146) and an outer edge (148) of the disk, the disk width being greater than or equal to the component width.

8. The NFC antenna of any preceding claim, wherein the first surface (144) is opposite the second surface (142).

9. The NFC antenna of any preceding claim, further comprising a cover (116) covering the carrier (130), the antenna circuit (152), the electronic component (150), and the antenna element (160) from the external environment.

10. The NFC antenna of claim 9, wherein the cover (116) includes a central bore (118) extending through the cover, the central bore (118) of the cover being axially aligned with the central bore (132) of the carrier.

11. The NFC antenna of any preceding claim, wherein the RF coil (164) includes a wire (166) in a spiral shape forming a plurality of windings (174).

12. The NFC antenna of any one of claims 1 to 10, wherein the RF coil (164) includes a laser direct structured, LDS, circuit on an LDS substrate, the LDS circuit forming a plurality of windings (174).

13. The NFC antenna of any preceding claim, wherein the electronic component (150) includes a microprocessor.

14. The NFC antenna of claim 4 or any claim dependent thereon, the RF coil (164) arranged within the footprint of the disk between the inner edge (146) and the outer edge (148).

15. The NFC antenna of any preceding claim, wherein the RF coil (164) includes a plurality of windings (174) including an inner winding (176) and an outer winding (178) radially outward of the inner winding, the RF coil (164) having a ring-shaped footprint defined between the inner winding (146) and the outer winding (148), the footprint of the RF coil (164) being arranged within the footprint of the disk (134).
